# EUROPÄISCHE PATENTSCHRIFT

(11) **EP 1 986 876 B1**
(45) Veröffentlichungstag und Bekanntmachung des Hinweises auf die Patenterteilung: **04.09.2013**
(21) Anmeldenummer: 07721948.3
(22) Anmeldetag: 22.02.2007
(51) Int. Cl.: B60J 7/00

(54) **VERDUNKELUNGSVORRICHTUNG FÜR EINE LICHTDURCHLÄSSIGE SCHEIBE, INSBESONDERE FÜR KRAFTFAHRZEUGE**
SHADING DEVICE FOR A LIGHT-PERMEABLE WINDOW, IN PARTICULAR FOR MOTOR VEHICLES
DISPOSITIF D'OBSCURCISSEMENT POUR UNE VITRE TRANSPARENTE, NOTAMMENT POUR VEHICULES AUTOMOBILES

(30) Priorität: 22.02.2006 FR 0601520
(43) Veröffentlichungstag der Anmeldung: 05.11.2008
(73) Patentinhaber: Webasto SE, 82131 Stockdorf (DE)
(72) Erfinder: SERNEELS, Marc, 85140 Les Essarts (FR)
(74) Vertreter: Grünberg, Thomas
(86) Internationale Anmeldenummer: PCT/DE2007/000334
(87) Internationale Veröffentlichungsnummer: WO 2007/095924

(56) Entgegenhaltungen:
- EP-A1- 1 566 295
- EP-A2- 1 006 012
- WO-A-96/01191
- DE-A1- 10 336 038
- DE-U1-202004 006 750
- US-A- 6 015 184

## Beschreibung

Die vorliegende Erfindung betrifft eine Vorrichtung, die dazu bestimmt ist, mindestens eine lichtdurchlässige Scheibe mittels eines Vorhangs abzudunkeln.

Die Erfindung findet eine besonders vorteilhafte, jedoch nicht ausschließliche Anwendung auf dem Gebiet der Kraftfahrzeuge.

Heute werden immer mehr Dächer von Kraftfahrzeugen mit lichtdurchlässigen, d.h. transparenten oder durchscheinenden Scheiben ausgestattet. Es handelt sich im Allgemeinen entweder um ein Schiebedachsystem, dessen bewegliche Scheibe aus Glas ausgeführt wird, oder um eine feste Scheibe aus Glas, die direkt einen mehr oder weniger großen Teil des Dachhimmels bildet.

Unabhängig von der in Aussicht genommenen Ausführungsform wird diese Art von mehr oder weniger transparenter Scheibe in der Praxis systematisch in Kombination mit einer Lichtabdunkelung verwendet, welche geeignet ist, parallel zur Innenfläche der Glasscheibe ausgefahren zu werden. Die Aufgabe einer solchen Vorrichtung ist es, zu verhindern, dass die Lichtstrahlen, die durch die Glasscheibe eindringen, sich im Inneren des Fahrgastraums ausbreiten. Ziel ist dabei natürlich, den Treibhauseffekt im Inneren des Kraftfahrzeuges insbesondere an Tagen mit starker Sonneneinstrahlung zu begrenzen.

Bei den nach dem Stand der Technik an sich bekannten Verdunkelungsvorrichtungen unterscheiden sich zwei Vorrichtungen, die ihre Aufgabe durch den Einsatz eines mehr oder weniger durchlässigen Leinenvorhangs erfüllen, welcher für die Verschiebung relativ zu einem abzudunkelnden Bereich zwischen einer Aufnahmeposition und einer ausgefahrenen Position beweglich montiert ist. Im Allgemeinen werden die beiden entgegengesetzten Enden der Leinwand jeweils mit einem von dem abzudunkelnden Bereich beabstandet angeordneten, für die Axialrotation beweglich montierten Aufrollrohr und einer für die Verschiebung längs des genannten abzudunkelnden Bereiches beweglich montierten Zugstange fest verbunden. Das Ganze ist in der Weise ausgestaltet, dass die Leinwand in der Aufnahmeposition auf ein Aufrollrohr aufgerollt wird und dass die genannte Leinwand sich in der ausgefahrenen Position unterhalb des abzudunkelnden Bereiches erstreckt.

Es kann sich im Übrigen manchmal als vorteilhaft erweisen, dass die Leinwand in Längsrichtung und/oder in Querrichtung in dem abzudunkelnden Bereich gestützt werden kann. Dies ist insbesondere dann der Fall, wenn die abzudunkelnde Scheibe große Abmessungen aufweist, um jedes Hängematten-Phänomen unter der Einwirkung des Eigengewichts der Leinwand zu vermeiden und so die Effizienz und das rein ästhetische Aussehen der Verdunkelungsvorrichtung zu garantieren. Dies ist aber auch dann der Fall, wenn die abzudunkelnde Scheibe eine signifikante Krümmung aufweist, um sich bestmöglich an die Innenseite der genannten Scheibe anzupassen und somit die Raumausnutzung im Inneren des Fahrzeuges zu optimieren.

Unabhängig davon ist es für die Ausführung einer solchen Abstützung bekannt, die Leinwand mit einer oder mehreren Querverstärkungen zu versehen, die relativ steif und im Übrigen geeignet sind, zwischen zwei beiderseits des abzudunkelnden Bereiches jeweils in Längsrichtung angeordneten Führungsschienen zu gleiten. Die Verbindung zwischen jeder Querver-stärkung und der Leinwand erfolgt im Allgemeinen mittels eines Überzugs, d.h. eines Gewebestreifens, der durch seine beiden Seitenränder quer über der genannten Leinwand in der Weise befestigt ist, dass ein innerer Raum geschaffen wird, der die genannte Querverstärkung frei aufzunehmen vermag. Die eigentliche Befestigung der Ränder jedes Überzuges auf der Leinwand erfolgt üblicherweise durch Schweißen, Kleben und/oder Vernähen.

Diese Art von Verdunkelungsvorrichtung mit Vorhang und Querverstärkungen weist jedoch den Nachteil auf, ein unzureichend aufwertendes visuelles Erscheinungsbild, insbesondere angesichts der Lastenhefte für Fahrzeuge der Oberklasse, zu bieten. Die Befestigung der beiden Seitenränder jedes Überzuges an der Rückseite der Leinwand neigt in der Tat dazu, die Vorderseite der genannten Leinwand, d.h. also die von den Benutzern einzusehende Fläche, mit Abdrücken zu versehen. Diese Abdrücke werden konkret durch zwei wenig ansprechende lineare Spuren ausgeprägt, die den Kontakt- und Befestigungsbereichen zwischen dem Gewebestreifen des Überzuges und der Leinwand entsprechen.

Aus der Druckschrift EP 1 566 295 A1 ist eine Verdunkelungsvorrichtung mit den Merkmalen des Oberbegriffs des Patentanspruches 1 bzw. des Patentanspruches 4 bekannt. Diese Verdunkelungsvorrichtung dient zur Abschattung einer lichtdurchlässigen Scheibe und umfasst eine Leinwand, die zur Abschattung der Scheibe von einem Wickelrohr abwickelbar ist oder zur Freigabe der Scheibe auf das Wickelrohr aufwickelbar ist. Des Weiteren umfasst diese bekannte Verdunkelungsvorrichtung eine Querverstärkung, die mit der Leinwand verbunden ist und deren Enden in Führungsschienen gleiten können. Die Querverstärkung weist eine innere Aufnahme auf, die über einen Spalt offen ist. Die Breite des Spalts ist geringer als der Durchmesser der Aufnahme. Die Aufnahme kann eine Falte der Leinwand aufnehmen, wozu die Leinwand einen durch eine Stange erzeugten verdickten Teil aufweist, dessen Querschnitt größer ist als die Breite des Spalts, so dass die Leinwand unverlierbar mit der Querverstärkung verbunden ist. Bei einer Montage der Querverstärkung kann die Stange gegenüber der Leinwand verrutschen, so dass ein genaues Positionieren der Querverstärkung gegebenenfalls schwierig ist.

Der Erfindung liegt die Aufgabe zugrunde, das vorgenannte Problem zu lösen.

Entsprechend wird erfindungsgemäß eine Verdunkelungsvorrichtung einer lichtdurchlässigen Scheibe vorgeschlagen, die eine Leinwand, die für die Verschiebung zwischen einer ausgefahren Position, in der sie sich unterhalb eines abzudunkelnden Bereiches erstreckt, und einer Aufnahmeposition, in der sie von dem genannten abzudunkelnden Bereich beabstandet angeordnet ist, beweglich montiert ist, und mindestens eine Querverstärkung umfasst, die mit der Leinwand fest verbunden ist und deren Enden jeweils geeignet sind, längs der beiden beiderseits des abzudunkelnden Bereiches in Längsrichtung angeordneten Führungs-schienen zu gleiten, wobei die Verdunkelungsvorrichtung es erlauben würde, die Probleme nach dem Stand der Technik zu vermeiden, indem insbesondere ein beträchtlich ansprechen-deres Erscheinungsbild geboten wird.

Die Lösung des gestellten technischen Problems besteht erfindungsgemäß darin, dass jede Querverstärkung eine innere Aufnahme aufweist, die einerseits in Längsrichtung über eine Spalte offen ist, deren Breite geringer ist als die der genannten inneren Aufnahme, und andererseits geeignet ist, eine Falte der Leinwand aufzunehmen, welche ausgehend von der Leinwand in Querrichtung angeordnet ist und mit einem verdickten Teil versehen ist, dessen Querschnitt größer ist als die Breite der genannten Spalte, wobei der verdickte Teil der Falte durch ein Sperrelement gebildet wird, das mit der Außenfläche der Falte der Leinwand fest verbunden ist. Alternativ wird der verdickte Teil der Falte der Leinwand durch eine Wulst gebildet, die durch Aufrollen der genannten Falte gebildet wird.

Es ist anzumerken, dass in der Gesamtheit dieses Beschreibungstextes der Ausdruck transparent sich im weitesten Sinne versteht. So bezeichnet eine transparente Scheibe ganz allgemein jedes lichtdurchlässige Element, d.h. also ein vollständig transparentes oder mehr oder weniger durchscheinendes Element.

Die so definierte Erfindung bietet den Vorteil, dass für jede Verbindung mit einer Querverstär-kung nur ein einziger Querabdruck an der Vorderseite der Leinwand erzeugt wird. Es handelt sich um eine Linie, die das Erscheinungsbild des Raumes bestimmt, der die beiden beiderseits der Falte der Leinwand gelegenen Teile der Leinwand abgrenzt.

Die vorliegende Erfindung betrifft auch die Merkmale, welche sich aus der folgenden Beschreibung ergeben und welche einzeln oder in allen möglichen technischen Kombinationen zu berücksichtigen sind

Diese als nicht einschränkendes Beispiel gegebene Beschreibung macht besser verständlich, aus was die Erfindung besteht und wie sie realisiert werden kann. Sie wird im Übrigen unter Bezugnahme auf die beigefügten Zeichnungen gegeben, in denen

Fig. 1 eine erfindungsgemäße Verdunkelungsvorrichtung zeigt, wobei die Leinwand in ausgefahrener Position dargestellt wird;

Fig. 2 eine zur Fig. 1 ähnliche Darstellung ist, wobei sich die Leinwand jedoch in der Aufnahmeposition befindet;

Fig. 3 eine Verbindung zwischen der Querverstärkung und der Leinwand zeigt, die einer ersten Ausführungsform der Erfindung entspricht;

Fig. 4 eine Verbindung zwischen der Querverstärkung und der Leinwand veranschaulicht, die ihrerseits einer zweiten Ausführungsform der Erfindung entspricht.

Aus Gründen der Klarheit werden die jeweils gleichen Bestandteile mit identischen Bezugszeichen bezeichnet. Des Weiteren werden lediglich die für das Verständnis der Erfindung wesentlichen Bestandteile dargestellt, wobei dies auch nicht maßstabsgerecht und nur in schematischer Form erfolgte.

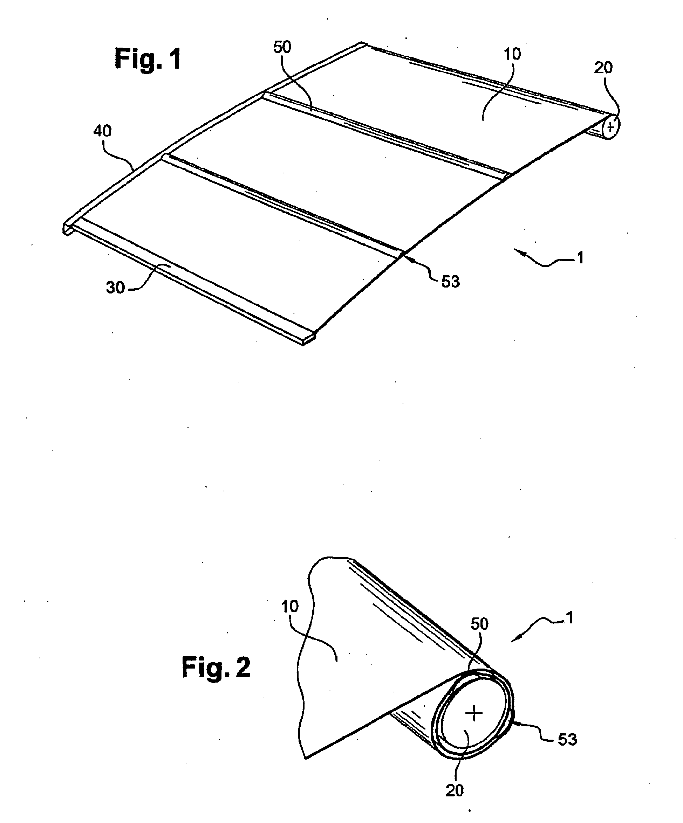

Die Figuren 1 bis 2 zeigen eine Verdunkelungsvorrichtung 1, die dazu bestimmt ist, im Inneren des Fahrgastraums eines Kraftfahrzeuges fest verbunden zu werden, und die die Aufgabe hat, eine fest eingebaute Glasscheibe abzudunkeln, die im oberen Teil der Karosserie des genannten Fahrzeuges den Dachhimmel bildet.

Wie man aus den schematischen Darstellungen ersehen kann, ist die Verdunkelungsvorrichtung 1 vom Typ aufrollbarer Vorhang. Sie wird in der Tat von einer Leinwand 10 gebildet, deren beide entgegengesetzten Enden jeweils einerseits mit einem vom abzudunkelnden Bereich beabstandet angeordneten, für die Axialrotation beweglich montierten Aufrollrohr 20 und andererseits mit einer Zugstange 30 fest verbunden sind, deren Enden für die Gleitbewegung jeweils längs der beiden Gleitschienen 40, die beiderseits des genannten zu verdunkelnden Bereiches angeordnet sind, beweglich montiert sind. Es ist anzumerken, dass aus einfachen Gründen der Klarheit nur die hinten gelegene Führungsschiene 40 dargestellt wurde.

Um parallel zur Innenfläche der Glasscheibe ausgefahren werden zu können, ist die Leinwand 10 im Übrigen für die Verschiebung zwischen einer Aufnahmeposition, in der sie um ihr Aufrollrohr 20 (Figur 2) aufgerollt wird, und einer ausgefahrenen Position, in der sie sich unterhalb des abzudunkelnden Bereiches erstreckt (Figur 1), beweglich montiert..

Die Figuren 1 und 2 zeigen auch, dass die Verdunkelungsvorrichtung 1 außerdem mit zwei Querverstärkungen 50 versehen ist, die mit der Leinwand 10 fest verbunden und längs der Schienen 40, die bereits für die Führung der Verschiebung der Zugstange 30 verwendet werden, gleitend montiert sind. In diesem Ausführungsbeispiel werden die Enden jeder Querver-stärkung 50 mit klassischen Gleitkufen versehen, die aus Gründen der Klarheit nicht erneut dargestellt werden, welche aber jeweils geeignet sind, längs jeder Führungsschiene 40 zu gleiten.

Entsprechend dem Gegenstand der vorliegenden Erfindung ist jede Querverstärkung 50 mit einer inneren Aufnahme 51 versehen, die längs über eine Spalte 52 offen ist, deren Breite geringer ist als die der genannten inneren Aufnahme 51. Das Ganze ist im Übrigen in der Weise angeordnet und dimensioniert, dass die innere Aufnahme 51 in der Lage ist, eine Falte der Leinwand 11 aufzunehmen, die in Querrichtung auf der Höhe der Leinwand 10 angeordnet und mit einem verdickten Teil 12 versehen ist, der sich über die gesamte Länge der Falte der Leinwand 11 erstreckt und einen gegenüber der Breite der Spalte 52 größeren Querschnitt aufweist.

Es ist anzumerken, dass die Querverstärkungen 50, die mit der Leinwand 10 fest verbunden sind, entsprechend in der Lage sind, einerseits zusammen mit ihr auf der Höhe des abzudunkelnden Bereiches (Fig. 1) zu gleiten und sich andererseits zusammen mit ihr um ein Aufrollrohr 20 (Fig. 2) aufzurollen.

Nach einer Besonderheit der Erfindung ist jede innere Aufnahme 51 außerdem axial auf der Höhe mindestens eines der Enden der Querverstärkung 50 über eine Öffnung 53 offen, die das Passieren der Falte der Leinwand 11 mit ihrem verdickten Teil 12 ermöglicht, wobei die genannte Öffnung 53 mit der Spalte 52 in Verbindung steht.

Dies bedeutet mit anderen Worten, dass mindestens eines der beiden Enden jeder Querverstärkung 50 mit einer Öffnung 53 versehen ist, die einerseits mit der inneren Aufnahme 51 sowie der Spalte 52 in Verbindung steht und andererseits geeignet ist, das Einschieben oder das Herausziehen der mit ihrem verdickten Teil 12 versehenen Falte der Leinwand 11 zu erlauben.

In besonders vorteilhafter Weise weist jede innere Aufnahme 51 einen Abschnitt auf, der in der Lage ist, durch Verschiebung den verdickten Teil 12 der Falte der Leinwand 11 zu blockieren, und zwar in sämtlichen anderen Richtungen außer derjenigen, die dem Einschub oder dem Herausziehen des genannten verdickten Teils 12 in der genannten inneren Aufnahme 51 dient.

Die Fixierung des verdickten Teils 12 im Inneren der inneren Aufnahme 51 ist vor allem dazu bestimmt, das Auftreten von Spiel und damit jedes Problem von Vibrationen, die eine Geräuschquelle darstellen würden, zu vermeiden.

Nach einem weiteren vorteilhaften Merkmal der Erfindung kann die innere Aufnahme 51 jeder Querverstärkung 50 eine Form haben, die im Wesentlichen zu derjenigen des verdickten Teils 12 der entsprechenden Falte der Leinwand 11 komplementär ist.

Die innere Aufnahme 51 kann in der Tat so dimensioniert sein, dass sie den verdickten Teil 12 bestmöglich aufnimmt, d.h. um eine optimale Kompaktheit zu bieten, wobei gleichzeitig die Blockierfunktion effizient sichergestellt wird.

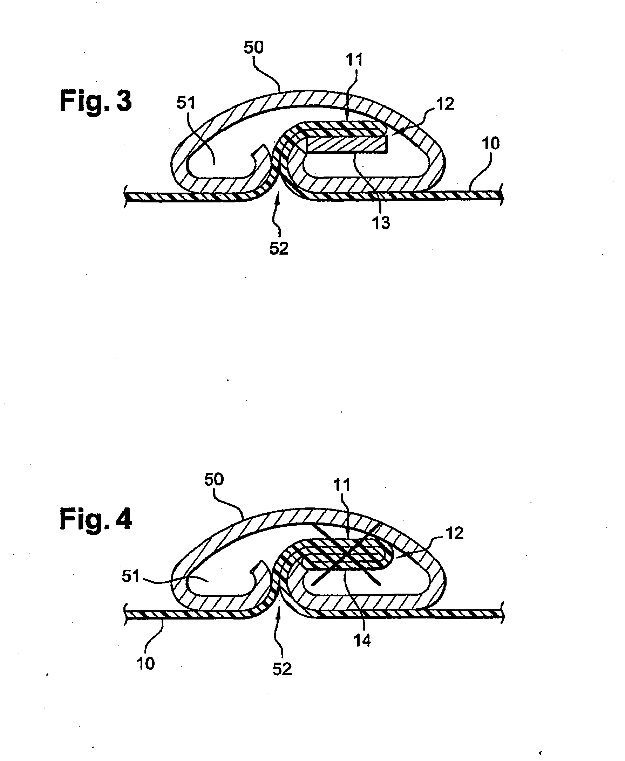

Fig. 3 zeigt einen ersten Typ der Verbindung zwischen der Querverstärkung 50 und der Leinwand 10, die der vorliegenden Erfindung entspricht.

Bei dieser ersten Ausführungsform wird der verdickte Teil 12 der Falte der Leinwand 11 durch ein Sperrelement 13 gebildet, das mit der Außenfläche der genannten Falte der Leinwand 11 fest verbunden ist.

Es versteht sich, dass in der Theorie das Sperrelement 13 in gleicher Weise einen integralen Bestandteil der Falte der Leinwand 11 bilden könnte, wie z. B. ein Überstand, der im Vergleich zur Außenfläche der Falte der Leinwand 11 eine Wulst bildet oder wie im vorliegenden Fall durch ein angesetztes Element gebildet wird, das an der Rückseite der Falte der Leinwand 11 mittels einer beliebigen an sich bekannten Befestigungstechnik fest verbunden ist.

Nach einer Besonderheit der genannten ersten Ausführungsform erstreckt sich das Sperrelement 13 quer über die gesamte Breite der Leinwand 10, d.h. also über die gesamte Länge der Falte der Leinwand 11.

Bei diesem Ausführungsbeispiel wird das Sperrelement 13 konkret durch ein Flachelement aus Thermoplastikmaterial gebildet, das in Querrichtung an der Rückseite der Falte der Leinwand 11, genauer gesagt an der Außenfläche der Falte der Leinwand 11, befestigt ist.

Fig. 4 zeigt andererseits einen zweiten Typ der Verbindung zwischen der Querverstärkung 50 und der Leinwand 10, die ebenfalls der vorliegenden Erfindung entspricht.

Bei dieser zweiten Ausführungsform wird der verdickte Teil 12 der Falte der Leinwand 11 durch eine Wulst 14 gebildet, die durch Verstauen bzw. Aufrollen der genannten Falte der Leinwand 11 gebildet wird.

Es wird hier festgehalten, dass der Begriff der Wulst 14 indirekt impliziert, dass die verschiedenen Faltungen der Falten der Leinwand 11 untereinander in der Weise verbunden sind, dass sie ein unteilbares Ganzes bilden. Diesbezüglich ist im Übrigen anzumerken, dass das in Fig. 4 zu sehende Kreuz für die Eigenschaft der festen Verbindung der verschiedenen Faltungen der Falte der Leinwand 11 symbolisch steht. Jede an sich bekannte Befestigungstechnik kann auch hier verwendet werden.

Es ist jedoch auch anzumerken, dass die Wulst 14 theoretisch aus einer beliebigen Art der Überlappung der Falte der Leinwand 11 gebildet werden kann, natürlich unter der Voraussetzung, dass dies eine zusätzliche Verdickung erzeugt, die in der Lage ist, einen verdickten Teil 12 zu bilden, wie er in der Erfindung definiert wird.

Nach einer Besonderheit der genannten zweiten Ausführungsform ist die Wulst 14 in Querrichtung über die gesamte Breite der Leinwand 10 angeordnet, d.h. also über die gesamte Länge der Falte der Leinwand 11.

Analog zu dem in Fig. 4 dargestellten Beispiel bzw. nach einer ersten Variante der genannten zweiten Ausführungsform, wird die Wulst 14 durch Verstauen bzw. Zusammenfalten des distalen Teils der Falte der Leinwand 11 gebildet, wobei das Kreuz hier ein Verbinden durch Vernähen der beiden Falten der Faltung symbolisiert.

Es ist anzumerken, dass die Anzahl der die Wulst 14 bildenden Falten a priori beliebig gewählt werden kann. Es ist entsprechend möglich, bei dem Beispiel nur eine einfache Faltung oder aber mehrere in einer Abfolge paralleler Schichten angeordnete Falten vorzusehen.

Nach einer nicht dargestellten zweiten Variante der zweiten Ausführungsform kann jedoch die Wulst 14 auch durch ein Zusammenfalten des distalen Teils der Falte der Leinwand gebildet werden.

Analog zu dem, was vorstehend ausgeführt wurde, kann die Anzahl der die Wulst 14 bildenden Aufwicklungen a priori beliebig gewählt werden.

Natürlich betrifft die Erfindung ganz allgemein jedes Kraftfahrzeug, das mindestens eine Verdunkelungsvorrichtung 1 nach der vorstehenden Beschreibung aufweist.

## Patentansprüche

1. Verdunkelungsvorrichtung (1) einer lichtdurchlässigen Scheibe, die eine Leinwand (10), die für die Verschiebung zwischen einer ausgefahren Position, in der sie sich unterhalb eines abzudunkelnden Bereiches erstreckt, und einer Aufnahmeposition, in der sie von dem genannten abzudunkelnden Bereich beabstandet angeordnet ist, beweglich montiert ist, sowie mindestens eine Querverstärkung (50) umfasst, die mit der Leinwand (10) fest verbunden ist und deren Enden jeweils geeignet sind, längs der beiden beiderseits des abzudunkelnden Bereiches in Längsrichtung angeordneten Führungsschienen (40) zu gleiten, wobei jede Querverstärkung (50) eine innere Aufnahme (51) aufweist, die einerseits in Längsrichtung über eine Spalte (52) offen ist, deren Breite geringer ist als die der genannten inneren Aufnahme (51), und andererseits geeignet ist, eine Falte der Leinwand (11) aufzunehmen, welche ausgehend von der Leinwand (10) in Querrichtung angeordnet ist und mit einem verdickten Teil (12) versehen ist, dessen Querschnitt größer ist als die Breite der genannten Spalte, **dadurch gekennzeichnet, dass** der verdickte Teil der Falte der Leinwand (11) durch ein Sperrelement gebildet wird, das mit der Außenfläche der genannten Falte der Leinwand (11) fest verbunden ist.

2. Verdunkelungsvorrichtung (1) nach Anspruch 1, **dadurch gekennzeichnet, dass** sich das Sperrelement (13) quer über die gesamte Breite der Leinwand (10) erstreckt.

3. Verdunkelungsvorrichtung (1) nach den Ansprüchen 1 oder 2, **dadurch gekennzeichnet, dass** das Sperrelement (13) durch ein Flachelement gebildet wird, das in Querrichtung an der Rückseite der Falte der Leinwand (11) befestigt ist.

4. Verdunkelungsvorrichtung (1) einer lichtdurchlässigen Scheibe, die eine Leinwand (10), die für die Verschiebung zwischen einer ausgefahren Position, in der sie sich unterhalb eines abzudunkelnden Bereiches erstreckt, und einer Aufnahmeposition, in der sie von dem genannten abzudunkelnden Bereich beabstandet angeordnet ist, beweglich montiert ist, sowie mindestens eine Querverstärkung (50) umfasst, die mit der Leinwand (10) fest verbunden ist und deren Enden jeweils geeignet sind, längs der beiden beiderseits des abzudunkelnden Bereiches in Längsrichtung angeordneten Führungsschienen (40) zu gleiten, wobei jede Querverstärkung (50) eine innere Aufnahme (51) aufweist, die einerseits in Längsrichtung über eine Spalte (52) offen ist, deren Breite geringer ist als die der genannten inneren Aufnahme (51), und andererseits geeignet ist, eine Falte der Leinwand (11) aufzunehmen, welche ausgehend von der Leinwand (10) in Querrichtung angeordnet ist und mit einem verdickten Teil (12) versehen ist, dessen Querschnitt größer ist als die Breite der genannten Spalte, **dadurch gekennzeichnet, dass** der verdickte Teil (12) der Falte der Leinwand (11) durch eine Wulst (14) gebildet wird, die durch Aufrollen der genannten Falte der Leinwand (11) gebildet wird.

5. Verdunkelungsvorrichtung (1) nach Anspruch 4, **dadurch gekennzeichnet, dass** die Wulst (14) in Querrichtung über die gesamte Breite der Leinwand (10) angeordnet ist.

6. Verdunkelungsvorrichtung (1) nach einem der Ansprüche 4 oder 5, **dadurch gekennzeichnet, dass** die Wulst (14) durch Verstauen bzw. Zusammenfalten des distalen Teils der Falte der Leinwand (11) gebildet wird.

7. Verdunkelungsvorrichtung (1) nach einem der Ansprüche 4 oder 5, **dadurch gekennzeichnet, dass** die Wulst durch ein Zusammenfalten des distalen Teils der Falte der Leinwand (11) gebildet wird.

8. Verdunkelungsvorrichtung (1) nach einem der Ansprüche 1 bis 7, **dadurch gekennzeichnet, dass** die innere Aufnahme (51) außerdem axial auf der Höhe mindestens eines der Enden der Querverstärkung (50) über eine Öffnung (53) offen ist, die das Passieren der Falte der Leinwand (11) mit ihrem verdickten Teil (12) ermöglicht, wobei die genannte Öffnung (53) mit der Spalte (52) in Verbindung steht.

9. Verdunkelungsvorrichtung (1) nach einem der Ansprüche 1 bis 8, **dadurch gekennzeichnet, dass** die innere Aufnahme (51) der Querverstärkung (50) einen Abschnitt aufweist, der in der Lage ist, durch Verschiebung den verdickten Teil (12) der Falte der Leinwand (11) zu blockieren, und zwar in sämtlichen anderen Richtungen außer derjenigen, die dem Einschub oder dem Herausziehen des genannten verdickten Teils (12) in der genannten inneren Aufnahme (51) dient.

10. Verdunkelungsvorrichtung (1) nach einem der Ansprüche 1 bis 9, **dadurch gekennzeichnet, dass** die innere Aufnahme (51) der Querverstärkung (50) eine Form aufweist, die im Wesentlichen zu derjenigen des verdickten Teils (12) der Falte der Leinwand (11) komplementär ist.

11. Kraftfahrzeug, **dadurch gekennzeichnet, dass** es mindestens eine Verdunkelungsvorrichtung (1) nach einem der vorstehenden Ansprüche umfasst.

## Claims

1. Shading device (1) of a light-permeable window which comprises a canvas (10), which is movably mounted for displacement between an extended position in which it extends below a region to be shaded, and a received position in which it is arranged at a distance from the aforementioned region to be shaded, and at least one transverse reinforcement (50), which is fixedly connected to the canvas (10) and the ends of which are respectively suitable for sliding along the two guide rails (40) arranged on both sides of the region to be shaded in the longitudinal direction, each transverse reinforcement (50) having an inner receptacle (51), which, on the one hand, is open in the longitudinal direction via a gap (52), the width thereof being smaller than that of the aforementioned inner receptacle (51) and, on the other hand, is suitable for receiving a fold of the canvas (11) which, starting from the canvas (10), is arranged in the transverse direction and is provided with a thickened part (12), the cross section thereof being greater than the width of the aforementioned gap, **characterized in that** the thickened part of the fold of the canvas (11) is formed by a locking element, which is fixedly connected to the outer face of the aforementioned fold of the canvas (11).

2. Shading device (1) according to Claim 1, **characterized in that** the locking element (13) extends transversely over the entire width of the canvas (10).

3. Shading device (1) according to Claims 1 or 2, **characterized in that** the locking element (13) is formed by a planar element which is fastened in the transverse direction to the rear face of the fold of the canvas (11).

4. Shading device (1) of a light-permeable window which comprises a canvas (10), which is movably mounted for displacement between an extended position in which it extends below a region to be shaded, and a received position in which it is arranged at a distance from the aforementioned region to be shaded, and at least one transverse reinforcement (50), which is fixedly connected to the canvas (10) and the ends of which are respectively suitable for sliding along the two guide rails (40) arranged on both sides of the region to be shaded in the longitudinal direction, each transverse reinforcement (50) having an inner receptacle (51), which, on the one hand, is open in the longitudinal direction via a gap (52), the width thereof being smaller than that of the aforementioned inner receptacle (51) and, on the other hand, is suitable for receiving a fold of the canvas (11) which, starting from the canvas (10), is arranged in the transverse direction and is provided with a thickened part (12), the cross section thereof being greater than the width of the aforementioned gap **characterized in that** the thickened part (12)of the fold of the canvas (11) is formed by a bead (14), which is formed by rolling up the aforementioned fold of the canvas (11).

5. Shading device (1) according to Claim 4, **characterized in that** the bead (14) is arranged in the transverse direction over the entire width of the canvas (10).

6. Shading device (1) according to one of Claims 4 or 5, **characterized in that** the bead (14) is formed by compacting and/or folding up the distal part of the fold of the canvas (11).

7. Shading device (1) according to one of Claims 4 or 5, **characterized in that** the bead is formed by folding up the distal part of the fold of the canvas (11).

8. Shading device (1) according to one of Claims 1 to 7, **characterized in that** the inner receptacle (51) is, moreover, open axially, level with at least one of the ends of the transverse reinforcement (50) via an opening (53), which allows the fold of the canvas (11) to be passed through with its thickened part (12), the aforementioned opening (53) being connected to the gap (52).

9. Shading device (1) according to one of Claims 1 to 8, **characterized in that** the inner receptacle (51) of the transverse reinforcement (50) has a portion which is able to block the thickened part (12)of the fold of the canvas (11) by displacement, and namely in all directions apart from that which serves for inserting or removing the aforementioned thickened part (12) in the aforementioned inner receptacle (51).

10. Shading device (1) according to one of Claims 1 to 9, **characterized in that** the inner receptacle (51) of the transverse reinforcement (50) has a shape which is substantially complementary to that of the thickened part (12) of the fold of the canvas (11).

11. Motor vehicle, **characterized in that** it comprises at least one shading device (1) according to one of the preceding claims.

## Revendications

1. Dispositif d'obscurcissement (1) pour une vitre transparente, qui comprend une toile (10) montée de manière déplaçable pour le déplacement entre une position sortie dans laquelle elle s'étend sous un région à obscurcir et une position de rangement dans laquelle elle est disposée à distance de ladite région à obscurcir, ainsi qu'au moins un renfort transversal (50), qui est connecté fixement à la toile (10) et dont les extrémités sont chacune adaptées pour glisser le long des deux rails de guidage (40) disposés dans la direction longitudinale de chaque côté de la région à obscurcir, chaque renfort transversal (50) présentant un logement intérieur (51) qui est d'une part ouvert dans la direction longitudinale par le biais d'une fente (52) dont la largeur est inférieure à celle dudit logement intérieur (51), et qui est approprié d'autre part pour recevoir un pli de la toile (11) qui est disposé dans la direction transversale à partir de la toile (10) et qui est pourvu d'une partie épaissie (12) dont la section transversale est plus grande que la largeur de ladite fente, **caractérisé en ce que** la partie épaissie du pli de la toile (11) est formée par un élément de blocage qui est connecté fixement à la surface extérieure dudit pli de la toile (11).

2. Dispositif d'obscurcissement (1) selon la revendication 1, **caractérisé en ce que** l'élément de blocage (13) s'étend transversalement sur toute la largeur de la toile (10).

3. Dispositif d'obscurcissement (1) selon les revendications 1 ou 2, **caractérisé en ce que** l'élément de blocage (13) est formé par un élément plat qui est fixé dans la direction transversale sur le côté arrière du pli de la toile (11).

4. Dispositif d'obscurcissement (1) pour une vitre transparente, qui comprend une toile (10) montée de manière déplaçable pour le déplacement entre une position sortie dans laquelle elle s'étend sous un région à obscurcir et une position de rangement dans laquelle elle est disposée à distance de ladite région à obscurcir, ainsi qu'au moins un renfort transversal (50), qui est connecté fixement à la toile (10) et dont les extrémités sont chacune adaptées pour glisser le long des deux rails de guidage (40) disposés dans la direction longitudinale de chaque côté de la région à obscurcir, chaque renfort transversal (50) présentant un logement intérieur (51) qui est d'une part ouvert dans la direction longitudinale par le biais d'une fente (52) dont la largeur est inférieure à celle dudit logement intérieur (51), et qui est approprié d'autre part pour recevoir un pli de la toile (11) qui est disposé dans la direction transversale à partir de la toile (10) et qui est pourvu d'une partie épaissie (12) dont la section transversale est plus grande que la largeur de ladite fente, **caractérisé en ce que** la partie épaissie (12) du pli de la toile (11) est formée par un bourrelet (14) qui est formé par enroulement dudit pli de la toile (11).

5. Dispositif d'obscurcissement (1) selon la revendication 4, **caractérisé en ce que** le bourrelet (14) est disposé dans la direction transversale sur toute la largeur de la toile (10).

6. Dispositif d'obscurcissement (1) selon l'une quelconque des revendications 4 ou 5, **caractérisé en ce que** le bourrelet (14) est formé par rassemblement ou repliement de la partie distale du pli de la toile (11).

7. Dispositif d'obscurcissement (1) selon l'une quelconque des revendications 4 ou 5, **caractérisé en ce que** le bourrelet est formé par repliement de la partie distale du pli de la toile (11).

8. Dispositif d'obscurcissement (1) selon l'une quelconque des revendications 1 à 7, **caractérisé en ce que** le logement intérieur (51) est en outre ouvert axialement à la hauteur d'au moins l'une des extrémités du renfort transversal (50) par le biais d'une ouverture (53) qui permet le passage du pli de la toile (11) avec sa partie épaissie (12), ladite ouverture (53) étant en liaison avec la fente (52).

9. Dispositif d'obscurcissement (1) selon l'une quelconque des revendications 1 à 8, **caractérisé en ce que** le logement intérieur (51) du renfort transversal (50) présente une portion qui est en mesure de bloquer par déplacement la partie épaissie (12) du pli de la toile (11), et ce dans toutes les autres directions sauf celle qui sert à insérer ou ressortir ladite partie épaissie (12) dans ledit logement intérieur (51) ou hors de celui-ci.

10. Dispositif d'obscurcissement (1) selon l'une quelconque des revendications 1 à 9, **caractérisé en ce que** le logement intérieur (51) du renfort transversal (50) présente une forme qui est essentiellement complémentaire de celle de la partie épaissie (12) du pli de la toile (11).

11. Véhicule automobile, **caractérisé en ce qu'**il comprend au moins un dispositif d'obscurcissement (1) selon l'une quelconque des revendications précédentes.
